# FASCICULE DE BREVET EUROPEEN

(11) **EP 2 048 389 B1**
(45) Date de publication et mention de la délivrance du brevet: **25.07.2012**
(21) Numéro de dépôt: 08166174.6
(22) Date de dépôt: 09.10.2008
(51) Int. Cl.: F16C 23/04, F16C 33/12, F16C 33/16, F16C 33/14

(54) **Rotule légère d'articulation et procédé de fabrication d'une telle rotule**
Leichtes Kugelgelenk und Herstellungsverfahren eines solchen Kugelgelenks
Light ball-and-socket joint for articulation and method of manufacturing such a joint

(30) Priorité: 09.10.2007 FR 0758159
(43) Date de publication de la demande: 15.04.2009
(73) Titulaire: SKF Aerospace France, 26240 Saint-Vallier-sur-Rhône (FR)
(72) Inventeur: Jullière, Benjamin, 71380 Saint Marcel (FR)
(74) Mandataire: Myon, Gérard Jean-Pierre

(56) Documents cités:
- EP-A- 1 496 277
- EP-A- 1 666 628
- EP-A1- 1 213 526
- EP-A1- 1 798 429
- FR-A- 1 175 356
- FR-A- 2 357 777
- FR-A- 2 770 597
- GB-A- 767 051
- US-A- 4 138 285
- US-A- 5 137 374
- US-A- 5 230 661
- US-A- 5 763 106
- US-A1- 2003 068 194
- US-B1- 6 833 018
- SANDVIK AB: "Dormer - Information Générale" ARTICLE INTERNET, [Online] XP002488754 Extrait de l'Internet: URL:http://www.dormertools.com/sandvik/253 1/internet/s003592.nsf/Alldocs/Product*2DM achiningSolutions*2DPDF*2ATH*2DPDFfr/$file /1InformationG%C3%A9n%C3%A9rale.pdf>

## Description

La présente invention a trait à une rotule légère d'articulation et à un procédé de fabrication d'une telle rotule.

Dans l'industrie aéronautique, il est connu d'utiliser une rotule métallique pour immobiliser deux organes, tels qu'une bielle et une pièce de structure, en translation l'un par rapport à l'autre, tout en permettant un mouvement relatif en rotation de ces organes. Une telle rotule, décrite par exemple dans FR-A-2 770 597, comprend classiquement une bague intérieure et une bague extérieure métalliques. Une surface interne de la bague intérieure est adaptée pour être montée sur un arbre, alors que sa surface externe est sensiblement sphérique et apte à coopérer avec une surface interne correspondante de la bague extérieure. La bague intérieure et la bague extérieure possèdent ainsi trois degrés de liberté mutuels en rotation, tout en étant assujetties l'une à l'autre en translation.

En vue d'obtenir une rotule métallique légère, il est avantageux de former les bagues intérieure et extérieure d'une telle rotule en un métal ou en un alliage métallique de faible masse volumique. En particulier, le titane, les alliages de titane, l'aluminium et les alliages d'aluminium permettent de réaliser des bagues légères présentant une bonne résistance mécanique. Toutefois, le comportement en frottement des métaux et alliages métalliques précités n'est pas compatible avec les contraintes appliquées en fonctionnement sur les bagues d'une rotule d'articulation. En effet, les mouvements relatifs sous charge des bagues s'accompagnent de frottements, qui génèrent des phénomènes d'usure par fretting et par glissement au niveau des surfaces de contact des bagues. La dégradation de ces surfaces de contact entraîne une prise de jeu de la rotule et une augmentation du coefficient de frottement à l'interface entre les bagues. En particulier, il existe un risque que des pics de rugosité présents sur les surfaces frottantes sous l'effet de l'usure par fretting se soudent mutuellement, ce qui peut conduire, sous forte charge, au blocage complet ou grippage de la rotule.

On connaît par ailleurs des rotules légères comprenant des bagues intérieure et extérieure en alliage de titane dont les surfaces sphériques sont munies de revêtements spécifiques, tels que des couches minces de dureté élevée, rapportés sur les surfaces des bagues par dépôt en phase vapeur, ou Physical Vapor Deposition (PVD). Ces revêtements permettent d'améliorer les propriétés de frottement à l'interface entre les bagues. Toutefois, du fait de leur très faible épaisseur, ces revêtements sont susceptibles d'être éliminés rapidement lors des mouvements relatifs des bagues sous forte charge et présentent donc une plage de fonctionnement limitée en terme de pression de contact. Or, lorsque le revêtement de l'une des bagues est totalement éliminé, la surface en alliage de titane de cette bague entre en contact avec le revêtement de l'autre bague. Il en résulte un mode de dégradation rapide de la surface en alliage de titane, susceptible de conduire au grippage de la rotule, ce qui limite fortement la durée de vie de la rotule.

EP-A-1 496 277, sur lequel est basé le préambule de la revendication 1, décrit une rotule d'articulation comprenant une bague intérieure et une bague extérieure métalliques. Cette rotule comprend une première couche de contact, rapportée sur la surface interne sphérique de la bague extérieure, et une deuxième couche de contact, rapportée sur la surface externe sphérique de la bague intérieure. La première couche de contact est à base de polytétrafluoroéthylène (PTFE), alors que la deuxième couche de contact est une couche mince de TiAlN. Toutefois, cette rotule a une capacité de charge limitée.

C'est à ces Inconvénients qu'entend plus particulièrement remédier l'invention en proposant une rotule légère d'articulation présentant un comportement stable en fonctionnement et une durée de vie améliorée,

A cet effet, l'invention a pour objet une rotule légère d'articulation telle que définie à la revendication 1

Au sens de l'invention, on entend par surface sphérique une surface formée d'au moins une portion ou un tronçon de sphère.

Selon d'autres caractéristiques avantageuses de l'invention :
- la première couche de contact comprend une matrice métallique et des particules de lubrifiant solide piégées dans la matrice ;
- chaque bague est constituée en un métal ou en un alliage métallique de masse volumique Inférieure à 7800 kg/m³, de préférence inférieure à 5000 kg/m³;
- chaque bague est constituée en titane, en un alliage de titane, en aluminium ou en un alliage d'aluminium ;
- la première couche de contact a une dureté comprise entre environ 100 et 700Hv, alors que la deuxième couche de contact a une dureté supérieure à 700Hv:
- la rotule comprend une sous-couche d'adhésion intercalée entre la première couche de contact et la bague sur laquelle la première couche de contact est rapportée :
- la première couche de contact comprend une matrice en alliage de cuivre ayant une teneur en cuivre d'au moins 50 % en poids et des particules de lubrifiant solide, la proportion de particules de lubrifiant solide dans la première couche de contact étant comprise entre environ 1 et 30% en poids de la première couche de contact ;
- la première couche de contact est rapportée sur la surface externe sphérique de la bague intérieure ;
- la bague intérieure est constituée de deux éléments présentant chacun, en coupe transversale, sensiblement une forme de C.
- un lubrifiant liquide est présent dans la zone de contact.

L'invention a également pour objet un procédé de fabrication d'une rotule telle que décrite ci-dessus, comprenant des étapes dans lesquelles :
- on dépose la première couche de contact sur la surface sphérique de l'une des bagues par projection thermique d'une poudre comprenant des particules de lubrifiant solide ;
- on dépose la deuxième couche de contact sur la surface sphérique de l'autre bague.

En particulier, la deuxième couche de contact peut être déposée sur la surface sphérique de l'autre bague par un procédé de dépôt de couche mince en phase vapeur (PVD).

Les caractéristiques et avantages de l'invention apparaîtront dans la description qui va suivre d'un mode de réalisation d'une rotule légère d'articulation selon l'invention, donnée uniquement à titre d'exemple et faite en se référant aux dessins annexés dans lesquels :
- la figure 1 est une coupe transversale d'une rotule légère conforme à l'invention, montée sur un arbre ;
- la figure 2 est une coupe selon la ligne II-II de la figure 1 ; et
- les figures 3 à 5 sont des vues schématiques à plus grande échelle du détail III de la figure 2, montrant l'évolution de la zone de contact entre les première et deuxième couches de contact lors de l'utilisation de la rotule légère.

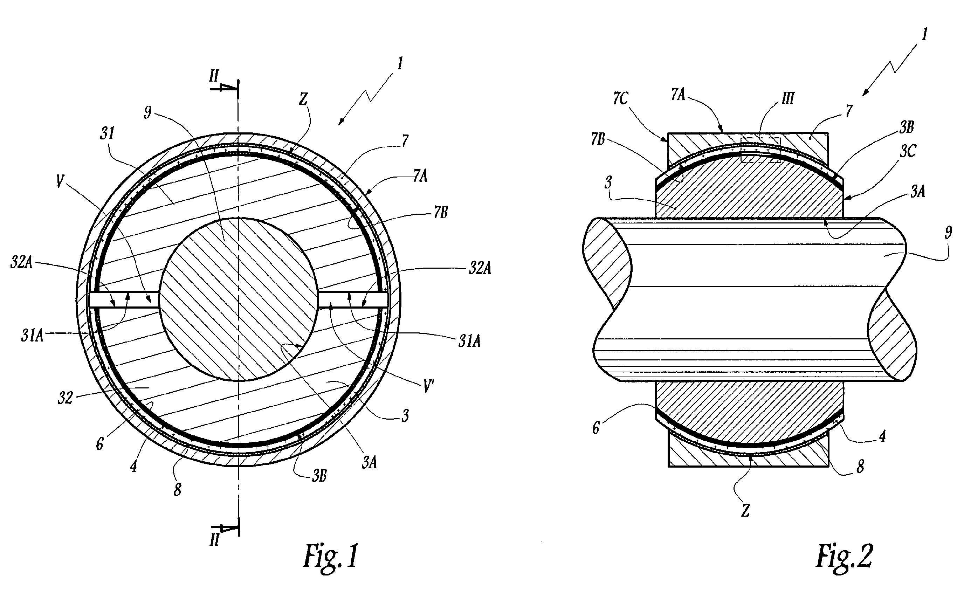

Sur les figures 1 et 2, l'épaisseur des couches rapportées sur les bagues de la rotule a été exagérée pour la clarté du dessin. En outre, l'épaisseur relative de la deuxième couche de contact par rapport aux épaisseurs des autres couches a été augmentée sur toutes les figures, afin d'améliorer sa visibilité.

La rotule légère 1 conforme à l'invention représentée sur les figures 1 et 2 comprend une bague intérieure 3 et une bague extérieure 7, constituées chacune en alliage de titane TA6V. La bague extérieure 7 comporte une surface externe 7A sensiblement cylindrique et une surface interne 7B sphérique, plus spécifiquement en tronçons de sphère, qui se raccorde à la surface externe 7A par des parois latérales 7C. La bague intérieure 3 comporte une surface interne 3A sensiblement cylindrique, prévue pour être disposée contre la périphérie extérieure d'un arbre 9 cylindrique correspondant, et une surface externe 3B présentant un profil sphérique, plus spécifiquement en tronçons de sphère, correspondant à celui de la surface interne 7B de la bague extérieure 7. La bague intérieure 3 et la bague extérieure 7 possèdent ainsi, l'une par rapport à l'autre, trois degrés de liberté en rotation. Comme montré sur la figure 2, les surfaces interne 3A et externe 3B de la bague intérieure 3 sont reliées l'une à l'autre par des parois latérales 3C qui font saillie, en coupe axiale, de part et d'autre des parois latérales 7C de la bague extérieure 7 dans la position de la figure 2, dans laquelle la surface cylindrique 7A est coaxiale à l'arbre 9.

Grâce à la faible masse volumique de l'alliage de titane TA6V constitutif des bagues 3 et 7, la rotule 1 présente un poids limité. En variante, chacune des bagues intérieure et extérieure d'une rotule légère selon l'invention peut être constituée en tout métal ou alliage métallique ayant une masse volumique inférieure à 7800 kg/m³, de préférence inférieure à 5000 kg/m³, notamment en un alliage de titane autre que le TA6V, en titane, en aluminium ou en un alliage d'aluminium.

Comme montré sur la figure 1, la bague intérieure 3 conforme à ce mode de réalisation est constituée de deux éléments 31 et 32 complémentaires, présentant chacun, en coupe transversale, sensiblement une forme de C. Tels que représentés sur la figure 1, les éléments 31 et 32 sont symétriques l'un de l'autre par rapport à un plan diamétral de la bague intérieure 3 perpendiculaire au plan de coupe de la figure 2. Les faces en regard 31A et 32A des éléments 31 et 32 sont planes et séparées mutuellement par un espace, de manière à définir deux volumes libres V et V', de part et d'autre de l'arbre 9. Dans un souci de clarté, la dimension transversale des volumes V et V' a été exagérée sur la figure 1. En service, l'arbre 9 plaque la bague intérieure 3 contre la bague extérieure 7, de sorte que la présence des volumes libres V et V' n'a pas d'effet préjudiciable sur la tenue mécanique de la rotule 1.

Les volumes libres V et V' sont propres à recevoir un lubrifiant liquide destiné à assurer, en fonctionnement, la lubrification des surfaces de contact de la bague intérieure 3 et de l'arbre 9, d'une part, et des surfaces de contact de la bague intérieure 3 et de la bague extérieure 7, d'autre part.

La rotule 1 comprend également une première et une deuxième couches de contact 4 et 8, déposées respectivement sur les surfaces sphériques 3B et 7B de la bague intérieure 3 et de la bague extérieure 7. La première couche de contact 4 déposée sur la surface 3B fait partie de la bague intérieure 3 et forme la surface de contact de la bague 3 destinée à coopérer avec la bague extérieure 7. De même, la deuxième couche de contact 8 déposée sur la surface 7B fait partie de la bague extérieure 7 et forme la surface de contact de la bague 7 destinée à coopérer avec la bague intérieure 3.

Les couches de contact 4 et 8 présentent chacune des propriétés spécifiques, adaptées pour améliorer le coefficient de frottement à l'interface entre les bagues intérieure 3 et extérieure 7. Plus spécifiquement, la première couche de contact 4, qui est rapportée sur la surface externe 3B de la bague intérieure 3, a une dureté inférieure à la dureté de la deuxième couche de contact 8 et une épaisseur supérieure à l'épaisseur de la deuxième couche de contact 8. La première couche de contact 4 présente un mode d'usure régulier et prévisible sous l'effet du frottement avec la deuxième couche de contact 8, alors que la deuxième couche de contact 8, qui est rapportée sur la surface interne 7B de la bague extérieure 7, a une forte résistance à l'usure. En particulier, la première couche de contact 4 a un comportement favorable à l'usure, lors du frottement avec la deuxième couche de contact 8, ce comportement pouvant être qualifié de sacrificiel. La première couche de contact 4 constitue ainsi une couche d'usure préférentielle sous l'effet du frottement avec la deuxième couche de contact 8, lors du fonctionnement de la rotule 1.

La première couche de contact 4 est en outre adaptée pour libérer, sous l'effet du frottement avec la deuxième couche de contact 8, des particules de lubrifiant solide dans la zone Z de contact entre les couches de contact 4 et 8, de manière à favoriser le glissement à l'interface entre les couches de contact 4 et 8. A cet effet, la première couche de contact 4 comprend une matrice métallique 41 et des particules 42 de lubrifiant solide réparties dans la matrice 41. La première couche de contact 4 est ainsi spécialement conçue pour libérer dans la zone Z des particules 42 de lubrifiant solide au fur et à mesure de l'usure de la matrice métallique 41, sous l'effet du frottement avec la deuxième couche de contact 8. La matrice métallique 41 de la première couche de contact 4 et la deuxième couche de contact 8 sont choisies de telle sorte que la matrice 41 présente une usure progressive et prévisible sous l'effet du frottement avec la deuxième couche de contact 8.

De manière avantageuse, la dureté de la première couche de contact 4, qui est inférieure à la dureté de la bague 3 sur laquelle elle est déposée, est comprise entre environ 100 et 700Hv, et l'épaisseur optimale de cette première couche de contact 4 est comprise entre environ 20 et 250µm.

De préférence, la première couche de contact 4 comprend un alliage de cuivre 41 en tant que matrice, ayant une teneur en cuivre d'au moins 50% en poids, et des particules 42 de lubrifiant solide, la proportion de particules 42 de lubrifiant solide dans la première couche de contact 4 étant comprise entre environ 1 et 30% en poids de la couche 4.

Dans ce mode de réalisation, suivant l'invention, la première couche de contact 4 est une couche d'épaisseur 100µm constituée en un alliage de cuivre, d'aluminium et de fer dont les teneurs respectives en poids sont de 88%±1 %, 10%±1 %, 2%±1 %, auquel ont été ajoutées des particules 42 de graphite dans une proportion de l'ordre de 30% en poids de la première couche de contact 4, en tant que particules de lubrifiant solide.

En variante, la première couche de contact 4 peut comprendre tout autre alliage de cuivre de caractéristiques adaptées, tel que, à titre d'exemples, un alliage de cuivre et de nickel de teneurs respectives en poids 62%±1%, 38%±1%, un alliage de cuivre et d'aluminium de teneurs respectives en poids 90%±1 %, 10%±1 %, ou un alliage de cuivre, d'aluminium, de nickel et de fer de teneurs respectives en poids 80%±1%, 10%±1%, 5%±1% et 5%±1%. Les particules de graphite peuvent également être remplacées par tout autre type de particules 42 de lubrifiant solide, tel que des particules d'autres variétés allotropiques du carbone, des particules de bisulfure de molybdène MoS₂, des particules de bisulfure de tungstène, des particules d'argent ou des particules de nitrure de bore.

Afin d'assurer une bonne liaison métallique entre la surface sphérique 3B de la bague intérieure 3 et la première couche de contact 4, la rotule 1 comprend avantageusement une sous-couche d'adhésion 6, intercalée entre la première couche de contact 4 et la surface 3B. A titre d'exemple, dans ce mode de réalisation, la sous-couche d'adhésion 6 est une couche d'épaisseur 50µm constituée en un alliage de nickel ayant une teneur en nickel de l'ordre de 55%, tel qu'un alliage de nickel et d'aluminium ou un alliage de nickel, de chrome, d'aluminium et d'yttrium. De préférence, l'épaisseur de la sous-couche d'adhésion 6 est comprise entre environ 20 et 200µm.

De préférence, la sous-couche d'adhésion 6 présente une dureté comprise entre environ 100 et 700Hv.

La dureté de la deuxième couche de contact 8, qui est supérieure à la dureté de la première couche de contact 4, est supérieure à 700Hv, et l'épaisseur optimale de cette deuxième couche de contact 8 est comprise entre environ 1 et 10µm. De préférence, la différence de dureté entre la première couche de contact 4 et la deuxième couche de contact 8 est supérieure à 350Hv.

La deuxième couche de contact 8 est un revêtement obtenu, à titre d'exemple, par dépôt de couche mince en phase vapeur (PVD). En particulier, dans ce mode de réalisation, la deuxième couche de contact 8 est une couche mince d'épaisseur comprise entre environ 3 et 8µm, présentant une dureté supérieure à 1000Hv.

A titre d'exemple, la deuxième couche de contact 8 peut être une couche mince de nitrure de titane, de nitrure de chrome ou une couche mince de nanocomposite de carbure de tungstène et de carbone Wc/C, obtenue par dépôt de couche mince en phase vapeur (PVD) et présentant une dureté comprise entre environ 1000 et 2500Hv. L'utilisation d'une couche mince de nanocomposite de carbure de tungstène et de carbone Wc/C en tant que deuxième couche de contact 8 est particulièrement avantageuse, dans la mesure où cette couche présente un excellent comportement en frottement car elle comprend notamment des particules de graphite.

De manière avantageuse, la proportion de particules 42 dans la première couche de contact 4 est adaptée de telle sorte que la lubrification de la zone de contact Z obtenue grâce à la libération des particules 42 est suffisante pour permettre un glissement satisfaisant à l'interface entre les couches de contact 4 et 8. La première couche de contact 4 constitue, du fait de sa dureté inférieure à la dureté de la deuxième couche de contact 8, la couche d'usure préférentielle et sacrificielle lors de l'utilisation de la rotule 1, ce qui permet une libération progressive des particules 42 de lubrifiant solide au fur et à mesure de l'usure de la première couche de contact 4. De plus, comme la première couche de contact 4 est relativement épaisse, la sécurité et la longévité de fonctionnement de la rotule 1 sont accrues.

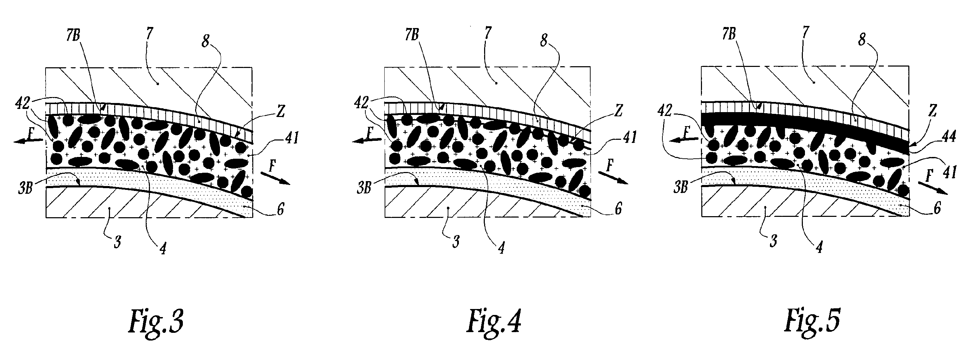

Plus spécifiquement, comme illustré schématiquement sur les figures 3 à 5, la libération progressive des particules 42 de lubrifiant solide par la première couche de contact 4 est obtenue sous l'effet du frottement entre les couches de contact 4 et 8 généré par le mouvement relatif des bagues intérieure 3 et extérieure 7, ce mouvement étant représenté schématiquement par les flèches F des figures 3 à 5. Le frottement entre les couches 4 et 8 entraîne une usure en surface de la première couche de contact 4. La matrice 41 en alliage de cuivre constitutif de la première couche de contact 4 est ainsi creusée en surface et les particules 42 de lubrifiant solide, initialement piégées dans l'épaisseur de la matrice 41 de la couche 4, sont libérées progressivement. Les particules 42 de lubrifiant solide migrent vers la zone de contact Z, jusqu'à former un film 44 de lubrifiant solide dans cette zone, comme visible sur la figure 5. Les particules 42 libérées dans la zone de contact Z permettent, lorsqu'un lubrifiant liquide est présent, de diminuer le coefficient de frottement entre les couches 4 et 8. La lubrification de la zone de contact Z est alors assurée conjointement par la présence de lubrifiant liquide et par la libération des particules 42. De plus, en cas de manque ou d'absence de lubrifiant liquide lors du fonctionnement de la rotule 1, les particules 42 permettent de lubrifier la zone de contact Z et favorisent ainsi le glissement entre les couches de contact 4 et 8, ce glissement étant essentiel pour le fonctionnement de la rotule 1.

Par ailleurs, il est avantageux que la première couche de contact 4 présente une conductivité thermique suffisante pour évacuer, hors de la zone de contact Z, la chaleur due au frottement entre les couches de contact 4 et 8. De préférence, la première couche de contact 4 présente une conductivité thermique supérieure à 30 W.m⁻¹.K⁻¹.

Un procédé de fabrication de la rotule 1 conforme à l'invention comprend des étapes dans lesquelles :
- On dépose la sous-couche d'adhésion 6 sur la surface externe 3B sphérique des deux éléments 31 et 32 constitutifs de la bague intérieure 3, puis on rapporte la première couche de contact 4 sur la surface 3B revêtue de la sous-couche d'adhésion 6. Le dépôt de la sous-couche d'adhésion 6 et le dépôt de la première couche de contact 4 sur la surface 3B de la bague intérieure 3 sont réalisés chacun par un procédé de projection thermique de poudre, tel qu'un procédé arc fil, plasma d'arc soufflé, HVOF (High Velocity Oxy-Fuel) ou HP-HVOF (High Pressure - High Velocity Oxy-Fuel). Le dépôt des couches 6 et 4 par projection thermique est particulièrement avantageux car il permet d'obtenir ces couches d'épaisseurs relativement importantes avec une vitesse de dépôt relativement élevée.

Plus spécifiquement, la sous-couche d'adhésion 6 est formée dans un premier temps, par projection de particules de l'alliage de nickel constitutif de la sous-couche 6, à l'état fondu, sur la surface externe 3B. La première couche de contact 4 est ensuite formée, par projection thermique d'un mélange de particules de la matrice en alliage de cuivre 41 et de particules 42 de lubrifiant solide, à l'état fondu, sur la surface externe 3B revêtue de la sous-couche d'adhésion 6. Une fois ces couches déposées, la forme et l'état de surface souhaités de la première couche de contact 4 sont obtenus en usinant, rectifiant et/ou rodant la première couche de contact 4.
- Simultanément, préalablement ou postérieurement aux dépôts des couches 6 et 4 sur la bague intérieure 3, on dépose la deuxième couche de contact 8 sur la surface interne 7B de la bague extérieure 7, en utilisant par exemple un procédé de dépôt de couche mince en phase vapeur (PVD).

Grâce à l'utilisation de métaux ou alliages métalliques de faibles masses volumiques pour former les bagues intérieure 3 et extérieure 7, la rotule légère 1 conforme à l'invention présente à un poids limité, ce qui est particulièrement avantageux pour son utilisation dans des applications aéronautiques. Les bagues 3 et 7 peuvent notamment être constituées en titane, en un alliage de titane, en aluminium ou en un alliage d'aluminium.

En outre, la rotule légère 1 présente un comportement stable en fonctionnement, grâce aux couches de contact 4 et 8 rapportées sur les surfaces sphériques 3B et 7B des bagues 3 et 7. En effet, les propriétés des première et deuxième couches de contact 4 et 8 sont optimisées pour, d'une part, réduire les phénomène d'usure par frottement des surface de contact des bagues 3 et 7 susceptibles de conduire au grippage de la rotule 1, ces surfaces de contact des bagues étant formées par les couches de contact 4 et 8, et, d'autre part, améliorer les propriétés de glissement à l'interface entre les bagues 3 et 7, de manière à entretenir le glissement relatif de ces bagues qui est essentiel pour le fonctionnement de la rotule 1.

La deuxième couche de contact 8 est ainsi choisie avec une dureté élevée et une forte résistance à l'usure, alors que la première couche de contact 4, comprenant notamment une matrice constituée en alliage de cuivre, est choisie avec une dureté plus faible et un mode d'usure progressif et prévisible sous l'effet du frottement avec la deuxième couche de contact 8. La première couche de contact 4 forme ainsi la couche d'usure préférentielle lors du fonctionnement de la rotule 1 et fournit un caractère accommodant et sacrificiel au contact entre les bagues 3 et 7. Grâce à la forte résistance à l'usure de la deuxième couche de contact 8 et à l'usure régulière de la première couche de contact 4 lors du fonctionnement de la rotule, le risque d'apparition de phénomènes de fretting et de transfert de matière entre les surfaces de contact des bagues 3 et 7, qui sont formées par les couches de contact 4 et 8, et de grippage de la rotule 1 est sensiblement réduit. De plus, comme la première couche de contact 4 a une épaisseur relativement importante, de préférence comprise entre environ 20 et 250µm, la rotule 1 conforme à l'invention présente une durée de vie améliorée par rapport aux rotules légères de l'état de la technique.

Grâce à la libération progressive des particules 42 de lubrifiant solide par la première couche de contact 4 lors du fonctionnement de la rotule 1, les propriétés de glissement entre les bagues 3 et 7 sont également optimisées. La libération des particules 42 par la première couche de contact 4 sous l'effet du frottement avec la deuxième couche de contact 8 permet en effet, en combinaison avec la présence éventuelle de lubrifiant liquide entre les couches de contact 4 et 8, d'assurer en permanence la lubrification de la zone de contact Z entre les bagues 3 et 7. Comme il ressort du procédé de fabrication de la rotule 1 décrit précédemment, l'intégration des particules 42 de lubrifiant solide dans la matrice en alliage métallique de la première couche de contact 4 est réalisée de manière aisée, lors du dépôt par projection thermique de la couche 4 sur la bague 3.

Par ailleurs, la construction de la bague intérieure 3 sous forme de deux éléments 31 et 32 à section transversale en C rend particulièrement avantageux le dépôt de la première couche de contact 4, qui est la couche d'usure préférentielle, sur cette bague intérieure. Il est en effet aisé de remplacer une telle bague intérieure bipartite, lorsqu'elle est usée, par une bague intérieure bipartite neuve, sans avoir à démonter ni à remplacer la bague extérieure 7, qui subit peu d'usure.

L'invention n'est pas limitée à l'exemple décrit et représenté. En particulier, selon une variante non représentée de l'invention, la sous-couche d'adhésion, destinée à améliorer la liaison métallique entre la première couche de contact et la surface de la bague sur laquelle cette couche de contact est rapportée, peut être omise.

Selon une autre variante non représentée de l'invention, la bague intérieure d'une rotule légère selon l'invention peut être monobloc, et non constituée de deux éléments. De plus, la première couche de contact peut être rapportée sur la surface interne de la bague extérieure au lieu de la surface externe de la bague intérieure, la deuxième couche de contact étant alors rapportée sur la surface externe de la bague intérieure. Toutefois, comme expliqué précédemment, lorsque la bague intérieure d'une rotule légère selon l'invention est constituée de deux éléments à section transversale en C, il est particulièrement avantageux de déposer la première couche de contact, qui est la couche d'usure préférentielle, sur la bague intérieure, de sorte qu'il est possible de remplacer facilement une bague intérieure usée par une bague intérieure neuve sans modification de la bague extérieure.

## Revendications

1. Rotule légère (1) d'articulation, du type comprenant une bague intérieure (3) et une bague extérieure (7) métalliques, pourvues respectivement d'une surface externe (3B) et d'une surface interne (7B) sphériques, la rotule comprenant une première couche de contact (4) rapportée sur la surface sphérique (3B) de l'une (3) des bagues et une deuxième couche de contact (8) rapportée sur la surface sphérique (7B) de l'autre bague (7), la première couche de contact (4) ayant une dureté inférieure à la dureté de la deuxième couche de contact (8) et une épaisseur supérieure à l'épaisseur de la deuxième couche de contact (8) et, par frottement avec la deuxième couche de contact (8), la première couche de contact (4) étant adaptée pour libérer des particules (42) de lubrifiant solide qui forment un film (44) de lubrifiant solide dans une zone de contact (Z) entre la première couche de contact (4) et la deuxième couche de contact (8), **caractérisée en ce que** la première couche de contact (4) est constituée en un alliage de cuivre, d'aluminium et de fer dont les teneurs respectives en poids sont de 88%±1%, 10%±1%, 2%±1%, la proportion de particules (42) de lubrifiant solide, constituées de graphite, étant de l'ordre de 30% en poids de la première couche de contact.

2. Rotule selon la revendication 1, **caractérisée en ce que** la première couche de contact (4) comprend une matrice métallique (41) et des particules (42) de lubrifiant solide piégées dans la matrice (41).

3. Rotule selon l'une quelconque des revendications 1 ou 2, **caractérisée en ce que** chaque bague (3, 7) est constituée en un métal ou en un alliage métallique de masse volumique inférieure à 7800 kg/m³, de préférence inférieure à 5000 kg/m³.

4. Rotule selon l'une quelconque des revendications précédentes, **caractérisée en ce que** chaque bague (3, 7) est constituée en titane, en un alliage de titane, en aluminium ou en un alliage d'aluminium.

5. Rotule selon l'une quelconque des revendications précédentes, **caractérisée en ce que** la première couche de contact (4) a une dureté comprise entre environ 100 et 700Hv, alors que la deuxième couche de contact (8) a une dureté supérieure à 700Hv,

6. Rotule selon l'une quelconque des revendications précédentes, **caractérisée en ce qu'**elle comprend une sous-couche d'adhésion (6) intercalée entre la première couche de contact (4) et la bague sur laquelle la première couche de contact (4) est rapportée.

7. Rotule selon l'une quelconque des revendications précédentes, **caractérisée en ce que** la première couche de contact (4) a une épaisseur de 100 µm.

8. Rotule selon l'une quelconque des revendications précédentes, **caractérisée en ce que** la première couche de contact (4) est rapportée sur la surface externe (38) sphérique de la bague intérieure (3).

9. Rotule selon la revendication 8, **caractérisée en ce que** la bague intérieure (3) est constituée de deux éléments (31, 32) présentant chacun, en coupe transversale, sensiblement une forme de C.

10. Rotule selon l'une quelconque des revendications précédentes, **caractérisée en ce qu'**un lubrifiant liquide est présent dans la zone de contact (Z).

11. Procédé de fabrication d'une rotule (1) selon l'une quelconque des revendications précédentes, **caractérisé en ce qu'**il comprend des étapes dans lesquelles :
- on dépose la première couche de contact (4) sur la surface sphérique (3B, 7B) de l'une des bagues (3, 7) par projection thermique d'une poudre comprenant des particules (42) de lubrifiant solide ;
- on dépose la deuxième couche de contact (8) sur la surface sphérique (7B, 3B) de l'autre bague (7, 3).

12. Procédé de fabrication selon la revendication 11, **caractérisé en ce qu'**on dépose la deuxième couche de contact (8) sur la surface sphérique (7B, 3B) par un procédé de dépôt de couche mince en phase vapeur (PVD).

## Claims

1. Light articulation ball-joint (1), comprising a metal inner ring (3) and a metal outer ring (7), provided respectively with a spherical outer surface (3B) and a spherical inner surface (7B), the ball-joint comprising a first contact layer (4) applied to the spherical surface of one of the rings and a second contact layer (8) applied to the spherical surface of the other ring, the first contact layer (4) having a hardness which is less than the hardness of the second contact layer (8) and a thickness which is greater than the thickness of the second contact layer (8) and, by friction with the second contact layer (8), the first contact layer (4) being adapted to release particles (42) of solid lubricant which form a film (44) of solid lubricant in a contact zone (Z) between the first contact layer (4) and the second contact layer (8), **characterized in that** the first contact layer (4) is formed by an alloy of copper, aluminium and iron, the respective proportions by weight thereof being 88%±1%, 10%±1%, 2%±1%, the proportion of particles (42) of solid lubricant, formed by graphite, being of the order of 30 % by weight of the first contact layer (4).

2. Ball-joint according to claim 1, **characterized in that** the first contact layer (4) comprises a metallic matrix (41) and particles (42) of solid lubricant trapped within the matrix (41).

3. Ball-joint according to any of claim 1 or 2, **characterized in that** each ring (3, 7) is made of a metal or a metal alloy having a density below 7800 kg/m³, preferably below 5000 kg/m³.

4. Ball-joint according to any of the preceding claims, **characterized in that** each ring (3, 7) is made of titanium, a titanium alloy, aluminium or an aluminium alloy.

5. Ball-joint according to any of the preceding claims, **characterized in that** the first contact layer (4) has a hardness of between around 100 and 700Hv, while the second contact layer (8) has a hardness of more than 700Hv.

6. Ball-joint according to any of the preceding claims, **characterized in that** an adhesion underlayer (6) interposed between the first contact layer (4) and the ring to which the first contact layer (4) is applied.

7. Ball-joint according to any of the preceding claims, **characterized in that** the first contact layer (4) has a thickness of 100 µm.

8. Ball-joint according to any of the preceding claims, **characterized in that** the first contact layer (4) is applied to the spherical outer surface (3B) of the inner ring (3).

9. Ball-joint according to claim 8, wherein the inner ring (3) is formed of two members (31, 32) each being substantially C-shaped in cross-section.

10. Ball-joint according to any of the preceding claims, **characterized in that** a liquid lubricant is present in the contact zone (Z).

11. Method of manufacture of a ball-joint (1) according to any of the preceding claims, **characterized in that** it comprises the steps of:
- depositing the first contact layer (4) on the spherical surface (3B, 7B) of one of the rings (3, 7) by thermal spraying of a powder comprising particles (42) of solid lubricant;
- depositing the second contact layer (8) on the spherical surface (7B, 3B) of the other ring (7, 3).

12. Method of manufacture according to claim 11, **characterized in that** the second contact layer (8) is deposited on the spherical surface (7B, 3B) by a thin film vapour phase deposition process (PVD).

## Patentansprüche

1. Leichte Gelenkkugel (1) der Art, die einen inneren Metallring (3) und einen äußeren Metallring (7) umfasst, die auf einer sphärischen Außenfläche (3B) bzw. einer sphärischen Innenfläche (7B) vorgesehen sind, wobei die Kugel eine erste Kontaktschicht (4), die auf der sphärischen Fläche (3B) eines (3) der Ringe aufgebracht ist, und eine zweite Kontaktschicht (8), die auf der sphärischen Fläche (7B) des anderen Rings (7) aufgebracht ist, umfasst, wobei die erste Kontaktschicht (4) eine Härte, die geringer als die Härte der zweiten Kontaktschicht (8) ist, und eine Dicke, die größer als die Dicke der zweiten Kontaktschicht (8) ist, aufweist und die erste Kontaktschicht (4) durch Reibung mit der zweiten Kontaktschicht (8) dazu angepasst wird, Teilchen (42) von festem Gleitmittel freizusetzen, die einen Film (44) aus festem Gleitmittel in einer Kontaktzone (Z) zwischen der ersten Kontaktschicht (4) und der zweiten Kontaktschicht (8) bilden, **dadurch gekennzeichnet, dass** die erste Kontaktschicht (4) aus einer Legierung von Kupfer, Aluminium und Eisen besteht, deren Gewichtsgehalte 88% ± 1%, 10% ± 1% bzw. 2 % ± 1 % sind, wobei der Anteil von Teilchen (42) von festem Gleitmittel, die aus Graphit bestehen, in der Größenordnung von 30 Gew.% der ersten Kontaktschicht liegen.

2. Kugel nach Anspruch 1, **dadurch gekennzeichnet, dass** die erste Kontaktschicht (4) eine Metallmatrix (41) umfasst und Teilchen (42) von festem Gleitmittel in der Matrix (41) eingefangen sind.

3. Kugel nach einem der Ansprüche 1 oder 2, **dadurch gekennzeichnet, dass** jeder Ring (3, 7) aus einem Metall oder einer Metalllegierung mit einer Volumenmasse besteht, die weniger als 7800 kg/m³, vorzugsweise weniger als 5000 kg/m³ beträgt.

4. Kugel nach einem der vorhergehenden Ansprüche, **dadurch gekennzeichnet, dass** jeder Ring (3, 7) aus Titan, einer Titanlegierung, Aluminium oder einer Aluminiumlegierung besteht.

5. Kugel nach einem der vorhergehenden Ansprüche, **dadurch gekennzeichnet, dass** die erste Kontaktschicht (4) eine Härte aufweist, die zwischen 100 und 700 Hv liegt, während die zweite Kontaktschicht (8) eine Härte von mehr als 700 Hv aufweist.

6. Kugel nach einem der vorhergehenden Ansprüche, **dadurch gekennzeichnet, dass** sie eine Zwischenhaftschicht (6) umfasst, die zwischen der ersten Kontaktschicht (4) und dem Ring, auf den die erste Kontaktschicht (4) aufgetragen ist, eingeschoben ist.

7. Kugel nach einem der vorhergehenden Ansprüche, **dadurch gekennzeichnet, dass** die erste Kontaktschicht (4) eine Dicke von 100 µm aufweist.

8. Kugel nach einem der vorhergehenden Ansprüche, **dadurch gekennzeichnet, dass** die erste Kontaktschicht (4) auf die sphärische Außenfläche (3B) des inneren Rings (3) aufgetragen ist.

9. Kugel nach Anspruch 8, **dadurch gekennzeichnet, dass** der innere Ring (3) aus zwei Elementen (31, 32) besteht, die jeweils im Querschnitt im Wesentlichen eine C-Form haben.

10. Kugel nach einem der vorhergehenden Ansprüche, **dadurch gekennzeichnet, dass** ein flüssiges Gleitmittel in der Kontaktzone (Z) vorliegt.

11. Verfahren zur Herstellung einer Kugel (1) nach einem der vorhergehenden Ansprüche, **dadurch gekennzeichnet, dass** es Schritte umfasst, in denen:
- die erste Kontaktschicht (4) auf der sphärischen Fläche (3B, 7B) eines der Ringe (3, 7) durch thermisches Spritzen eines Pulvers, das Teilchen (42) von festem Gleitmittel umfasst, abgeschieden wird;
- die zweite Kontaktschicht (8) auf der sphärischen Fläche (7B, 3B) des anderen Rings (7, 3) abgeschieden wird.

12. Herstellungsvertahren nach Anspruch 11, **dadurch gekennzeichnet, dass** die zweite Kontaktschicht (8) auf der sphärischen Fläche (7B, 3B) durch ein Verfahren der physikalischen Dampfphasenabscheidung (PVD) einer Dünnschicht abgeschieden wird.
